(19) Europäisches Patentamt
European Patent Office
Office européen des brevets

(11) **EP 3 885 213 A1**

(12) **EUROPEAN PATENT APPLICATION**
published in accordance with Art. 153(4) EPC

(43) Date of publication:
**29.09.2021 Bulletin 2021/39**

(51) Int Cl.:
**B60W 30/00** (2006.01)  **B60W 40/00** (2006.01)

(21) Application number: **19921191.3**

(22) Date of filing: **28.03.2019**

(86) International application number:
**PCT/CN2019/080144**

(87) International publication number:
**WO 2020/191724 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: SZ DJI Technology Co., Ltd.
**Shenzhen, Guangdong 518057 (CN)**

(72) Inventors:
• **MA, Jianyun**
**Shenzhen, Guangdong 518057 (CN)**
• **YING, Jiahang**
**Shenzhen, Guangdong 518057 (CN)**
• **SHANG, Zhimeng**
**Shenzhen, Guangdong 518057 (CN)**

(74) Representative: **Appelt, Christian W.**
**Boehmert & Boehmert
Anwaltspartnerschaft mbB
Pettenkoferstrasse 22
80336 München (DE)**

(54) **VEHICLE CONTROL SYSTEM AND VEHICLE**

(57) An embodiment of the present application discloses a system for control a vehicle, which includes a control module. The control module is electrically connected to a vehicle control bus and is configured to receive a bus signal from the vehicle control bus. The control module includes one or more processors configured to query a type of a control signal according to the bus signal, and convert-to-analog a control output signal of a vehicle according to a result of the query, to control a driving state of the vehicle, so that the vehicle is operated by a driver or in an automatically operated driving mode. The present application further discloses a vehicle including the foregoing system.

FIG. 1

EP 3 885 213 A1

**Description**

COPYRIGHT NOTICE

The content disclosed by this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

TECHNICAL FIELD

The present invention relates to the field of automated driving, and in particular, to a system for controlling a vehicle and a vehicle.

BACKGROUND

Currently, an automated driving system of a vehicle requires an additional control system in addition to a control network of the vehicle. However, a communication protocol of the control network of the vehicle is confidential before its delivery. Therefore, if the additional control system needs to be connected to the control network, the communication protocol needs to be decrypted. However, the decryption process is quite resource-intensive. In addition, a fault code would easily occur in the decryption process, that is, the control network cannot be accurately decrypted. In this case, there is often an error in information exchange between the additional control system and the control network of the vehicle, resulting in lower safety during the automatically operated driving of the vehicle.

BRIEF SUMMARY

In order to solve the aforementioned technical problems, a system for controlling a vehicle with simple operation and high safety is provided.
Further, a vehicle including the aforementioned system for vehicle control is provided.
An embodiment of the present invention discloses a system for controlling a vehicle. The system includes a control module electrically connected to a vehicle control bus and configured to receive a bus signal from the vehicle control bus. The control module includes one or more processors configured to: query a type of a control signal according to the bus signal; and convert-to-analog a control output signal of a vehicle according to a result of the query to control a driving state of the vehicle.
An optional embodiment of the present invention discloses a vehicle including the aforementioned system for controlling a vehicle.
Compared with the prior art, when the system for controlling a vehicle of the present invention executes the automatic operation driving mode, the control of each functional module of the vehicle can be done without the need to decode and analyze the information protocol in the vehicle's own operating system at all, such that the execution unit of the vehicle can perform the driving operation accurately, which simplifies the complexity of the automatic operation of the vehicle. At the same time, the vehicle control system in this application performs control based on the original control signal in the vehicle, thereby ensuring the accuracy and safety of vehicle control.

BRIEF DESCRIPTION OF THE DRAWINGS

To describe the technical solutions in embodiments of the present invention more clearly, the following briefly describes the accompanying drawings that need to be used in the embodiments. Apparently, the accompanying drawings in the following description show merely some embodiments of the present invention, and a person of ordinary skill in the art may derive other drawings from these accompanying drawings without creative efforts.

FIG. 1 is a circuit structure diagram of a system for control a vehicle according to an embodiment of the present invention;
FIG. 2 is a waveform diagram of each of a first sensing differential signal and a second sensing differential signal;
FIG. 3 is a schematic diagram of a circuit structure of a power supply unit, a second switch unit, and a second execution module shown in FIG. 1;
FIG. 4 is a schematic flowchart of a conventional gear shifting strategy according to an embodiment of the present application;
FIG. 5 is a function block diagram of a vehicle including a system for control a vehicle according to an embodiment of the present application;
FIG. 6 is a schematic structural diagram of a gearbox in a first execution unit according to an embodiment of the present application;

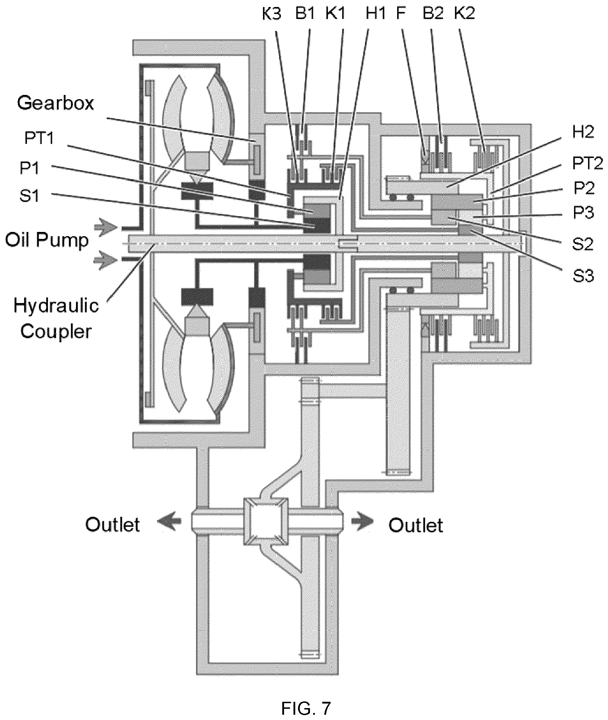

FIG. 7 is a schematic structural diagram of a connection between an oil pump and a hydraulic coupler in a first execution unit according to an embodiment of the present application.

DETAILED DESCRIPTION OF THE DRAWINGS

The technical solutions in the embodiments of the present application are clearly and completely described below with reference to the accompanying drawings in the embodiments of the present application. The described embodiments are merely some rather than all of the embodiments of the present application. All other embodiments obtained by a person of ordinary skill in the art based on the embodiments of the present application without creative efforts fall within the protection scope of the present application.

An embodiment of the present application discloses a system for control a vehicle. The system for control a vehicle is applied to a vehicle.

The system for control a vehicle includes a control module that is electrically connected to a vehicle control bus and configured to receive a bus signal from the vehicle control bus. The control module includes one or more processors configured to: query a type of the bus signal according to the bus signal, and convert-to-analog a control output signal of the vehicle according to a result of the query, to control the vehicle to be operated by a driver or in an automated driving mode.

In an optional embodiment of the present application, controlling a driving state of the vehicle includes: converting-to-analog a signal of the type corresponding to the result of the query, and outputting the signal to a corresponding execution unit.

In an optional embodiment of the present application, the converting-to-analog of the signal of the type corresponding to the result of the query includes: converting-to-analog the signal of the type corresponding to the result of the query so that the signal has a same waveform, voltage amplitude, and frequency as the control signal obtained through the query.

In an optional embodiment of the present application, the control signal includes a transmitted vehicle sensor signal and/or vehicle status signal.

In an optional embodiment of the present application, the bus signal is used for representing whether the vehicle is operated by the driver or in the automated driving mode, and a bus for transmitting the control signal includes a status signal bus electrically connected to a vehicle alert module and/or a sensor bus electrically connected to a sensor unit.

In an optional embodiment of the present application, the control module prestores a plurality of control signals for representing that the vehicle is in different driving states.

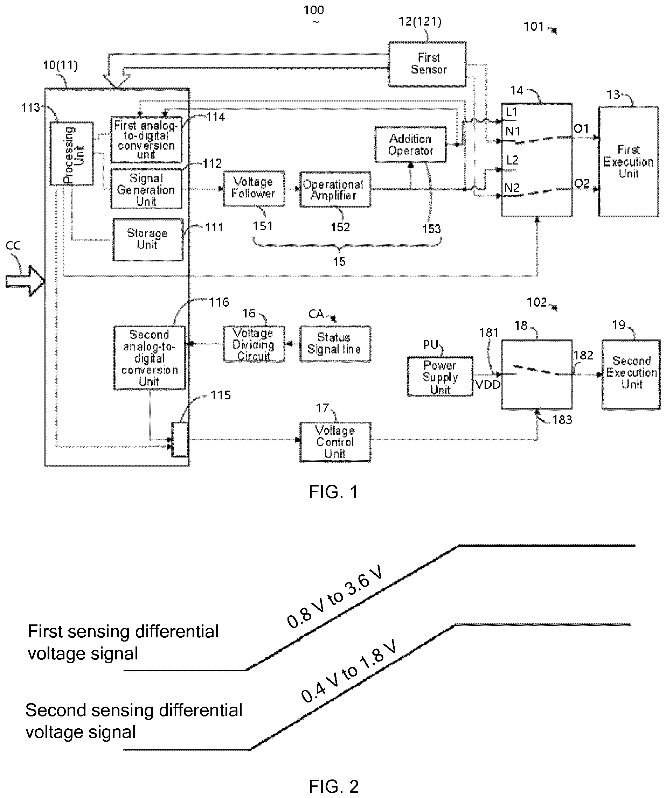

FIG. 1 is a circuit structure diagram of a system 100 for controlling a vehicle according to an embodiment of the present application.

As shown in FIG. 1, the system 100 for controlling a vehicle includes a control module 10, a first subsystem 101, and a second subsystem 102. The first subsystem 101 and the second subsystem 102 are separately electrically connected to the control module 10. The first subsystem 101 and the second subsystem 102 each obtain a different type of sensor signal or status signal according to a control signal. In this embodiment, the first subsystem 101 is configured to obtain a sensor signal collected by a sensing module through sensing, and the second subsystem 102 is configured to obtain a signal for controlling a vehicle to perform an alert operation.

A control bus CC is configured to transmit a mode signal that is provided by a master control system (not shown) and used for representing that a vehicle needs to be in an automatically operated driving mode or a manually operated driving mode. In this embodiment, the vehicle control bus is a controller area network (CAN) bus. The CAN bus is a type of bus that encrypts transmitted data. Therefore, an external system usually needs to decipher a transmitted signal in the CAN bus, and then controls an execution mechanism of the vehicle according to information obtained through the deciphering. However, for different manufacturers and different types of vehicles, the bus is encrypted in different manners. The use of the deciphering manner increases software costs. In addition, deciphering may generate a fault code and cause a packet loss, which easily causes loss of a transmission instruction of the bus or returning of the fault code, resulting in an execution failure.

The first subsystem 101 includes a sensor unit 12, an execution unit 13, a first switch unit 14, and an analog unit 15. Corresponding to the first subsystem 101, the control module 10 includes an analog control processor 11.

The analog control processor 11 is electrically connected to the vehicle control bus CC, the analog unit 15, and the first switch unit 14. The sensor unit 12 and the analog unit 15 are electrically connected to the execution unit 13 through the first switch unit 14. Under the control of the analog control processor 11 according to the mode signal, the first switch unit 14 causes the sensor unit 15 to be electrically connected to the execution unit 13 or causes the analog unit 15 to be electrically connected to the execution unit 13. The signal transmitted by the vehicle control bus CC is directly input to the sensor unit 12 through transparent transmission or pass-through. Transparent transmission means that it is only ensured that to-be-transmitted service content is transmitted from a source address to a destination address without any change to service data content regardless of the service content in communication. In this case, a sensor is responsible only for receiving a control signal from the vehicle control bus, and does not need to decipher the signal, thereby avoiding a packet loss and a large number of fault codes. By collecting the signal of the vehicle control bus CC, an analog signal waveform output by the bus CC can be obtained, and each analog signal waveform corresponds to a different type of control signal. The type of the control signal is determined by the waveform and an amplitude value of the analog signal. For example, a signal output by a steering wheel is a continuous analog differential signal, and an amplitude value of the signal is related to a trigonometric function value of a rudder angle of the steering wheel. For another example, a signal output by a throttle is a continuous analog differential signal, and an amplitude value of the signal is related to a stroke function of a throttle pedal. A type of a signal output by a brake is also a continuous analog differential signal, and an amplitude value of the signal is related to a stroke function of the brake. Specifically, amplitude values of output signals of different vehicles are different. For example, a relationship between a direction angle and an output voltage of an A-type vehicle may be expressed by using the following formula:

$$V_A = a * f\,(b\theta+c) + d$$

where $f(\theta)$ is a trigonometric function related to an angle $\theta$, and a, b, c, and d are correction coefficients of the function. The correction coefficients can be used to correct output voltages of different types of vehicles.

For different types of vehicles, a correspondence between the rudder angle and the output voltage may be collected in advance to obtain specific correction values of a, b, c, and d. As shown in FIG. 1, the sensor unit 12 includes at least one first sensor 121, which is configured to sense one of driving states of the vehicle and output a first sensing signal. In this embodiment, the first sensor 121 is a throttle position sensor, which is configured to sense a throttle pedal stroke distance. The first sensing signal is configured to represent a fuel amount and a vehicle speed that need to be provided currently.

In this embodiment, the first sensor signal includes a first sensing differential signal and a second sensing differential signal. In this embodiment, both the first sensing differential signal and the second sensing differential signal are differential voltage signals, and a second voltage range of the second sensing differential signal is greater than and includes a first voltage range of the first sensing differential signal.

FIG. 2 is a waveform diagram of each of the first sensing differential signal and the second sensing differential signal. The first sensing differential signal and the second sensing differential signal each have a different voltage range. For example, the first voltage range is 0.4 V to 1.8 V, and the second voltage range is 0.8 V to 3.6 V. The sensor unit 12 shown in FIG. 1 obtains both the first sensing differential signal and the second sensing differential signal, and determines, according to amplitude values and waveforms of the first sensing differential signal and the second sensing differential signal, the control signal transmitted by the bus CC.

Still referring to FIG. 1, the analog control processor 11 queries, according to the mode control signal provided by the vehicle control bus CC, signals corresponding to different types of signal buses. In an optional embodiment, the analog control processor 11 queries a first sensor signal in sensor-type signals, and outputs a reference signal to the analog unit 15 according to the result of the query. The analog unit 15 converts-to-analog a first sensing signal according to the reference signal to output a first analog signal. The first analog signal has a same changing curve as the sensing signal.

In an optional embodiment, the analog control processor 11 queries an entire first sensor signal formed by the two differential signals, i.e., the first sensing differential signal and the second sensing differential signal, and obtains, by querying a prestored signal waveform, a signal type represented by the first sensor signal.

Specifically, the analog control processor 11 includes a storage unit 111, a signal generation unit 112, a processing unit 113, and a first analog-to-digital conversion unit 114. The storage unit 111 stores a sensor signal list including a plurality of first sensor signals. The plurality of first sensor signals are sensor signals prestored according to a plurality of states of the throttle pedal stroke that are collected in advance by the first sensor 121.

The processing unit 113 is separately electrically connected to the storage unit 111 and the signal generation unit 112. The processing unit 112 receives the mode control signal, and output a corresponding selection signal to the first switch unit 14 according to the mode control signal. The mode control signal is configured to represent that the vehicle currently needs to be in the automatically operated driving mode or the manually operated driving mode. In addition, the mode control signal may be provided by a corresponding person outside the vehicle, or may be provided by a corresponding function module triggered by detection and recognition by a sensor module corresponding to the vehicle. In this embodiment, when the mode control signal is at a high level, it represents the automatically operated driving mode, and when the mode control signal is at a low level, it represents the manually operated driving mode.

After the mode control signal controls the vehicle to enter the automatically operated driving mode, the processing unit 113 is no longer controlled by the transparently transmitted signal of the vehicle control bus CC, but instead, is controlled by a control signal of a driving system. The control signal of the driving system may be partially from the vehicle control bus CC. In addition, the control signal of the driving system may be from a vehicle sensor, or a logical processor that generates a vehicle control signal according to the vehicle sensor. According to a type of a received signal, the processing unit 113 searches the sensor signal list for the first sensor signal corresponding to the type of the received signal, and convert-to-analog the first sensor signal to generate the first analog signal. The first analog signal controls the first execution unit 13 to perform a corresponding operation. In other words, the processing unit 112 controls, according to the first sensor signal obtained through the query, the signal generation unit 112 to output the corresponding reference signal. Further, the analog unit 15 converts-to-analog the first sensor signal according to the reference signal to generate the first analog signal.

The first analog signal includes a first analog differential signal and a second analog differential signal. In this embodiment, both the first analog differential signal and the second analog differential signal are differential voltage signals, the first analog differential signal corresponds to the first sensing differential signal, and the second analog differential signal corresponds to the second sensing differential signal. The first and second analog differential signals are input to an execution unit to control the vehicle. The execution unit includes various different types of executors, capable of controlling a rudder angle of a turning direction of the vehicle, controlling a gear of the vehicle, controlling the throttle and an engine speed of the vehicle, and the like.

The first analog signal includes a first analog differential signal and a second analog differential signal. The first analog differential signal has a same changing curve as the first sensing differential signal. The second analog differential signal has a same changing curve as the second sensing differential signal. Having a same changing curve includes having a same waveform, voltage amplitude, and frequency.

When the mode control signal represents that the vehicle currently needs to be in the manually operated driving mode, the processing unit 113 controls the first sensor signal that is correspondingly obtained through sensing by the sensor unit 12 according to a driver operation to be directly output to the first execution unit 13.

In this embodiment, the signal generation unit 112 is a pulse width modulation (PWM) signal circuit, and a reference signal output by the circuit is a pulse width modulation signal with a certain duty cycle. Corresponding first analog signals can be generated in cooperation with the analog unit 15 by outputting, corresponding to different first sensor signals, pulse width modulation signals with different duty cycles as reference signals.

The first analog-to-digital conversion unit 114 is electrically connected to the first sensor 121, the first switch unit 14, and the processing unit 113.

Specifically, the first analog-to-digital conversion unit 114 is electrically connected to two normally open input contacts of a relay in the first switch unit 14, to receive the first analog differential signal and the second analog differential signal that are fed back, perform analog-to-digital conversion to convert the first analog differential signal and the second analog differential signal into digital signals, and provide the digital signals to the processing unit 113. The processing unit 113 adjusts the pulse width modulation signal according to the first analog differential signal and the second analog differential signal that are fed back, so that the first analog differential signal and the second analog differential signal are within a preset range.

Further, the first analog-to-digital conversion unit 114 is electrically connected to the first sensor 121, to receive the first sensing differential signal and the second sensing differential signal that are fed back, perform analog-to-digital conversion to convert the first sensing differential signal and the second sensing differential signal into digital signals, and provide the digital signals to the processing unit 113. The processing unit 113 determines a state of the first driving module according to the first sensing differential signal and the second sensing differential signal on which the analog-to-digital conversion processing has been performed, and performs a driving operation in the automatically operated driving mode or exits the automatically operated driving mode according to the state of the first driving module.

The analog unit 15 includes a voltage follower 151, an operational amplifier 152, and an addition operator 153 that are sequentially electrically connected.

The voltage follower 151 is electrically connected between the signal generation unit 112 and the operational amplifier 152, and is configured to receive the reference signal, to further perform, before the operational amplification processing is performed on the pulse width modulation signal, voltage following processing on the pulse width modulation signal so as to isolate the operational amplifier to prevent interference.

The operational amplifier 152 is separately electrically connected to the voltage follower 151 and the addition operator 153. After the pulse width modulation signal is received, the operational amplification processing is performed on the pulse width modulation signal, and then the pulse width modulation signal is converted into an analog voltage signal. The analog voltage signal has a first voltage range. The analog voltage signal is transmitted to the first switch unit 12 as the first analog differential signal.

The addition operator 153 is electrically connected to the first switch unit 12, and is configured to perform an addition operation on the first analog differential signal according to a preset reference voltage range to obtain a second voltage range as the second analog differential signal, and transmit the second analog differential signal to the second switch unit 12.

The first switch unit 14 is electrically connected to the analog unit 15, the sensor unit 12, and the execution unit 13, and is configured to: according to a selection signal output by the analog control processor 11, selectively electrically connect the analog unit 15 to the execution unit 13 or electrically connect the sensor unit 12 to the execution unit 13. The execution unit 13 is configured for a driving operation of the vehicle. The sensor unit 12 and the analog unit 15 are not simultaneously electrically connected to the execution unit 13.

In this embodiment, the first switch unit 14 is a double-pole double-throw relay (not shown), and the relay includes two normally closed input contacts L1 and L2, two normally open input contacts N1 and N2, and two output terminals O1 and O2.

The two normally closed input contacts L1 and L2 of the relay are electrically connected to the first sensor 121, to receive the first sensing differential signal and the second sensing differential signal in the first sensing signal.

The two normally open input contacts N1 and N2 of the relay are respectively electrically connected to the operational amplifier 152 and the addition operator 153 in the analog unit 15, to receive the first analog differential signal and the second analog differential signal in the first analog signal.

The analog control processor 11 controls the two output terminals O1 and O2 of the relay to be electrically connected to the execution unit 13, to selectively control the first sensing signal or the first analog signal to the execution unit 13 according to the selection signal.

When the selection signal is at a high level, it represents that the vehicle is in the automatically operated driving mode, and under control of the low level, the two normally open input contacts N1 and N2 and the two output terminals O1 and O2 of the relay are electrically connected. In other words, when the analog unit 15 is electrically connected to the execution unit 13, the first sensor signal is transmitted to the execution unit 13 by using the relay, and the execution unit 13 performs the corresponding driving operation according to the first sensor signal, for example, according to an operation performed by the driver on the throttle pedal, increases a pedal force on the throttle pedal to increase the vehicle speed or decreases the pedal force on the throttle pedal to decrease the vehicle speed.

When the selection signal is at a low level, it represents that the vehicle is in the manually operated driving mode and operated by the driver, and under control of the low level, the two normally closed input contacts L1 and L2 and the two output terminals O1 and O2 of the relay are electrically connected. In other words, when the sensor unit 12 is electrically connected to the execution unit 13, it represents that the vehicle is in the automatically operated driving mode, and the first analog signal is transmitted to the execution unit 13 through the relay, and the execution unit 13 performs the corresponding driving operation according to the first analog signal. For example, the execution unit 13, according to a current vehicle condition and a road condition directly, automatically increases a pedal force on the throttle pedal to increase the vehicle speed or decreases the pedal force on the throttle pedal to decrease the vehicle speed.

Since the control module 10 and the analog unit 15 are connected to the normally open input contacts of the relay, when the control module 10 cannot correctly output the first analog signal because a signal transmission exception or a power failure occurs in the control module 10, it can be ensured that the sensor unit 12 of the normally closed input contact of the relay can be reliably electrically connected to the first execution unit 13, thereby ensuring that the first sensor signal is reliably provided to the first execution unit 13 so that the first execution unit 13 correctly performs the corresponding operation and ensures safe driving of the vehicle.

In a modified embodiment of the present application, the first switch unit 14 is a multiway digital switch. The multiway digital switch includes at least two groups of input ports and at least one group of output ports. The two groups of input ports are not simultaneously electrically connected to the output port group. Each group of input ports includes two input ports. Each group of output ports includes two output ports. Two input ports in one group are electrically connected to the first sensor, to receive the first sensing differential signal and the second sensing differential signal in the first sensing signal. Two input ports in another group are electrically connected to the analog control unit, to receive the first analog differential signal and the second analog differential signal in the first analog signal.

The analog control processor 11 controls the two input ports to be connected to the first execution unit 13, to selectively provide the first sensing signal or the first analog signal to the first execution unit 13.

In other modified embodiments of the present application, the first sensor 121 is a steering wheel sensor configured to sense the position of a steering wheel when it turns, a brake sensor configured to sense the position of a brake during a braking stroke, a door lock sensor configured to sense a door lock position, or a gear sensor configured to sense a gear position, to correspondingly output the first sensing signal.

The analog control processor 11 is electrically connected to the vehicle control bus CC, and is configured to obtain the bus signal.

A working process of the first subsystem 101 is specifically as follows.

When the mode control signal is at the low level, it represents that currently the vehicle is in the manually operated driving mode. The processing unit 113 outputs the selection signal to the first switch unit 14, to control the two normally closed input contacts L1 and L2 and the two output terminals O1 and O2 thereof to be electrically connected, so that the sensor unit 12 is electrically connected to the first execution unit 13. In other words, during the manual operation, the first sensor signal obtained through sensing by the sensor unit 12 is directly transmitted to the first execution unit 13, to implement manually operated driving of the vehicle.

When the mode control signal is at the high level, it represents that currently the vehicle is in the automatically operated driving mode. The processing unit 113 outputs the selection signal to the first switch unit 14, to control the two normally open input contacts N1 and N2 and the two output terminals O1 and O2 to be electrically connected, so that the analog unit 15 is electrically connected to the first execution unit 13. In addition, the processing unit 113 queries the storage unit 111 for a first sensor signal meeting a current road condition. The signal generation unit 112 outputs a pulse width modulation signal with a corresponding duty cycle to the analog unit 15. Corresponding to the pulse width modulation signal, the analog unit 15 obtains the first analog differential signal and the second sensing differential signal in the first analog signal through isolation processing by the voltage follower 151 and the amplification and addition operation by the operational amplifier 152 and the addition operator 153.

The analog unit 15 outputs the first analog signal to the first execution unit 13, so that the control module 10 automatically controls the first execution unit 13.

Further, the second subsystem 102 includes a voltage dividing circuit 16, a voltage control circuit 17, a second switch unit 18, and a second execution unit 19, and a power supply unit PU. In addition, the analog control processor 11 further includes a second analog-to-digital conversion unit 116 and a first output unit 115. The voltage dividing circuit 16 is electrically connected between a status signal line CA and the second analog-to-digital conversion unit 116. The voltage control circuit 17 is electrically connected between the first output unit 115 and the switch module 18. In addition, the processing unit 113 is electrically connected to the first output unit 115.

The power supply unit PU is electrically connected to the switch module 18 and the second execution unit 19. In this embodiment, the first output unit 115 is an input/output pin GPIO of a chip.

The voltage dividing circuit 16 is electrically connected to the status signal line CA, and is configured to receive a status signal transmitted by the status signal line CA, for example, a signal for controlling the vehicle to perform an alert operation. In this embodiment, the status signal line CA is a left turn signal harness. The voltage dividing circuit 16 is configured to identify a voltage state of the status signal, that is, configured to identify whether the status signal is currently at a high voltage or a low voltage, correspondingly output, according to the high voltage or the low voltage of the status signal, an identification voltage signal that has a same waveform and amplitude as the status signal, and transmit the identification voltage signal to the second mode conversion unit 116. In addition, the storage unit 111 further prestores the status signal.

The second analog-to-digital conversion unit 116 performs analog-to-digital conversion to convert the identification voltage signal into a digital signal, and output the digital signal through the first output port 115.

The voltage control circuit 17 is electrically connected to the first output unit 115, and is configured to receive the identification voltage signal and accordingly output a second control signal. Specifically, when the identification voltage signal is at the first voltage, a second control sub-signal in a first voltage state is output; and when the identification voltage signal is at the second voltage, a second control sub-signal in a second voltage state is output.

In this embodiment, when the first voltage is at a high level, the first voltage state is a high level, and when the second voltage is at a low level, the second voltage state is a low level.

The second switch unit 18 includes a first connection terminal 181, a second connection terminal 182, and a control terminal 183. The first connection terminal 181 and the second connection terminal 182 are selectively electrically connected or electrically disconnected according to a voltage of the control terminal 183. The first connection terminal 181 is electrically connected to the power supply unit PU, to receive a first driving voltage VDD. The second connection terminal 182 is electrically connected to the second execution unit 19. The control terminal 183 is electrically connected to the voltage control circuit 17 in the analog control unit 11.

In this embodiment, the second switch unit 18 is a single-pole single-throw relay. The first connection terminal 181 is a normally open terminal of the relay. The second connection terminal 182 is an output terminal of the relay. The control terminal 183 is a power terminal of the relay. When the second control signal is at a high level, the relay is powered to be in a closed state, and the first connection terminal 181 is electrically connected to the second connection terminal 182. When the second control signal is at a low level, the relay is powered to be in an off state, and the first connection terminal 181 is electrically disconnected from the second connection terminal 182.

When the first connection terminal 181 is electrically connected to the second connection terminal 182, the first driving voltage VDD is transmitted to the second execution module 19, and the second execution module 19 performs a first alert operation, so that the vehicle is in a first alert state. When the first connection terminal 181 is electrically disconnected from the second connection terminal 182, the transmission of the first driving voltage VDD to the second execution module 19 is stopped.

In this embodiment, the first alert operation is a left turn alert or a right turn alert of the vehicle, the first alert state is that a left turn signal is turned on or a right turn signal is turned on, and the second execution unit 19 is the left turn signal or the right turn signal.

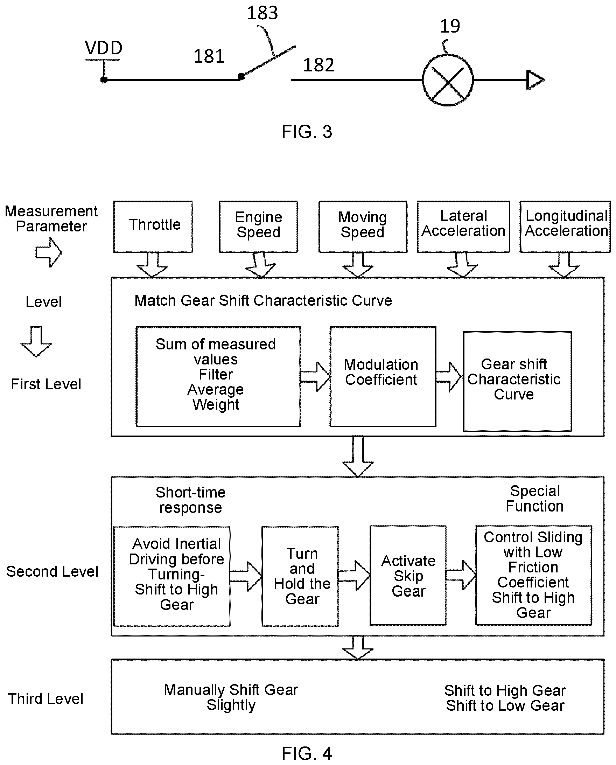

Specifically, referring to both FIG. 1 and FIG. 3, FIG. 3 is a simplified schematic diagram of a circuit of the power supply unit PU, the second switch unit 18, and the second execution module 19.

When the first connection terminal 181 is electrically connected to the second connection terminal 182, the first driving voltage VDD is transmitted to the second execution module 19, and the second execution module 19 is in an execution state of an alert operation, that is, the left turn signal is turned on. When the second control sub-signal is in the second voltage state, the first connection terminal 181 is electrically disconnected from the second connection terminal 182, the transmission of the first driving voltage VDD to the second execution module 19 is stopped, and the second execution module 19 is in an execution state of a non-alert operation, that is, the left turn signal is turned off. In this embodiment, the first driving voltage VDD is 12 V.

In another modified embodiment, the first alert operation is a door lock control alert, an ignition switch control alert, an emergency flasher control alert, a low beam headlamp alert, a width lamp alert, a front fog lamp alert, a rear fog lamp alert, or a high beam headlamp alert. The first alert state is that lock control, ignition switch control, emergency flasher control, a low beam headlamp, a width lamp, a front fog lamp, a rear fog lamp, or a high beam headlamp is activated. Correspondingly, the second execution module is a door lock, an ignition switch, an emergency flasher, the low beam headlamp, the width lamp, left and right turn signals, the front fog lamp, the rear fog lamp, or the high beam headlamp.

In other embodiments of the present application, the status signal may also be a left or right lane changing signal. In this case, the second execution unit 19 automatically performs a left or right lane changing operation accordingly in the automatically operated driving mode.

A working process of the second subsystem 102 is specifically as follows.

When the mode control signal is at the low level, it represents that currently the vehicle is in the manually operated driving mode. The voltage dividing circuit 16 outputs an identification voltage signal when identifying that the status signal is at the first voltage of the high level. The second analog-to-digital conversion unit 116 converts the identification voltage signal into a digital signal, and transmits the digital signal to the voltage control unit 17 by using the first output unit 115. In this case, the voltage control unit 17 outputs a second control signal in the first voltage state to the second switch unit 18 according to the identification voltage signal. Under the control of the second control signal, the second switch unit 18 causes the first connection terminal 181 to be directly electrically connected to the second connection terminal 182, so that the first driving voltage VDD received by the first connection terminal 181 is transmitted to the second execution unit 19 electrically connected to the second connection terminal 182, thereby enabling the second execution unit 19 to perform the first alert operation.

When the mode control signal is at the high level, it represents that currently the vehicle is in the automatically operated driving mode. The processing unit 113 queries the storage unit 111 to obtain the status signal, and transmits the status signal to the voltage control unit 17 by using the first output unit 115. In this case, the voltage control unit 17 outputs the second control signal in the first voltage state to the second switch unit 18 according to the status signal. Under the control of the second control signal, the second switch unit 18 causes the first connection terminal 181 to be directly electrically connected to the second connection terminal 182, so that the first driving voltage VDD received by the first connection terminal 181 is transmitted to the second execution unit 19 electrically connected to the second connection terminal 182, thereby enabling the second execution unit 19 to perform the first alert operation.

Corresponding to FIG. 1, an overall connection and a working process of the system 100 for controlling a vehicle in the vehicle (not shown) are as follows.

First, for the first subsystem 101, the sensor unit 12 is disconnected from the first execution unit 13, and for the second subsystem 102, the status signal line CA is electrically disconnected from the second switch unit 18.

Then, the sensor unit 12 is electrically connected to the first switch unit 14, and the control module 10 is electrically connected to the first switch unit 14 through the analog unit 15. The first switch unit 14 is further electrically connected to the first execution unit 13.

The status signal line CA is electrically connected to the control module 10, and the control module 10 is correspondingly electrically connected to the second switch unit 18.

During normal operation, according to a current working mode of the vehicle provided by the vehicle control bus, the sensor unit 12 is correspondingly caused to be electrically connected to the first execution unit 13 through the first switch unit 14, or the control module 10 is caused to be electrically connected to the first execution unit 13 through the analog unit 15.

In addition, according to the current working mode of the vehicle provided by the vehicle control bus, the control module 10 outputs a corresponding control signal to the second switch unit 18 according to a voltage state in the status signal line CA, to provide the first driving voltage VDD to the second execution unit 19 to perform an alert operation, or outputs a corresponding control signal to the second switch unit 18 to stop providing the first driving voltage VDD to the second execution unit 19 to stop performing an alert operation.

In the automatically operated driving mode, the vehicle may encounter different road conditions including passing and pedestrians during driving, and the system 10 for controlling a vehicle can generate analog signals according to a plurality of pieces of sensor information obtained in advance, to control gears and keep the vehicle driving in a most efficient range.

Compared with the prior art, the system 10 for controlling a vehicle in the present application, when executing the automatically operated driving mode, can control each function module of the vehicle without decoding and analyzing information protocols in an operating system of the vehicle, and enables the execution unit in the vehicle to accurately perform a driving operation, thereby simplifying automatically operated driving of the vehicle.

A gear shifting strategy of a conventional vehicle is shown in FIG. 4. FIG. 4 is a schematic flowchart of a conventional gear shifting strategy according to an embodiment of the present application. The gear shifting strategy includes the following three levels. Assuming that measurement parameters are collected, and the measurement parameters include at least a moving speed of a vehicle, an engine speed, a throttle parameter, and other parameters. In the first level, a gear shifting mode is used to match a gear shifting characteristic curve. To be specific, the measurement parameters are analyzed and processed to obtain processed parameters. Analyzing and processing include summation, filtering, averaging, weighting, and the like. Then, the processed parameters are used to match a gear shifting characteristic curve. In the second level, a short-time transient response is performed according to the measurement parameters. In the third level, manual acceleration or deceleration is responded to according to an engine speed limit. It can be learned that, both the engine speed of the vehicle and the moving speed of the vehicle matches the gear of the vehicle. In other words, if the speed of the vehicle decreases, the gear of the vehicle is shifted down.

If the speed of the vehicle increases, the gear of the vehicle is shifted up. The conventional gear shifting strategy has a problem of poor control effect. For example, the vehicle is usually at a high speed in a high-gear state when the vehicle is currently driving on an uphill road, resulting in a lack of power of the vehicle. Therefore, the gear of the vehicle needs to be shifted down to increase power for passing through the uphill road. According to the conventional gear shifting strategy, the gear of the vehicle can be shifted down only after the moving speed is reduced, resulting in low control efficiency, and causing low traction provided for the vehicle.

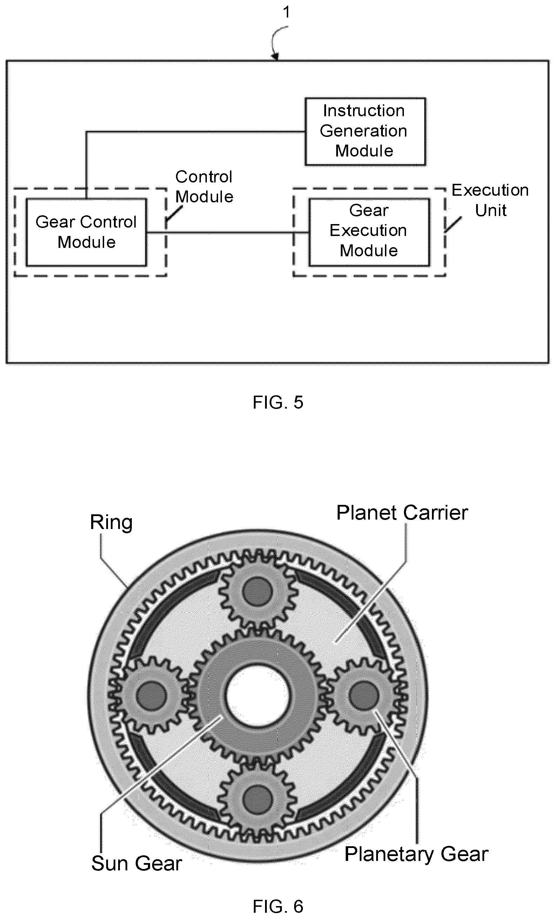

In view of the problem of the existing gear shifting strategy, in this embodiment of the present application, a gear control module is added between an instruction generation module and a gear execution module. For a connection relationship between the modules, refer to FIG. 5. FIG. 5 is a function block diagram of a vehicle 1 including a system 100 for controlling a vehicle according to an embodiment of the present application. As shown in FIG. 5, the gear control module is added between the instruction generation module and the gear execution module to separate gear control from a driving speed of the vehicle, so that the vehicle is in an appropriate gear, thereby improving a vehicle control effect. In this embodiment, the instruction generation module is the sensor unit 12 shown in FIG. 1, the gear control module is the control module 10 shown in FIG. 1, and an executor is the first execution unit 13 shown in FIG. 1.

Specifically, the control module may obtain a target gear parameter of the vehicle, generate an analog signal (that is, an adjusted operation instruction) according to the target gear parameter, and control the gear of the vehicle according to the analog signal, so that the gear of the vehicle maintains in a most efficient range. In addition, the gear of the vehicle can be directly shifted without a need to wait for a reduction or increase in the moving speed of the vehicle, thereby improving control efficiency.

For example, it is assumed that a current moving speed of the vehicle is 50 km/h. If the control module determines, according to sensor data, that the vehicle is currently on an uphill road, the sensor data may be obtained. The sensor data includes driving environment information. For example, the driving environment information includes slope information. The slope information is obtained by a video sensor or an inertial measurement unit (IMU). The slope information includes an angle, a length, and the like of the uphill. Further, the control module may determine a target gear of the vehicle according to the current moving speed of the vehicle and the slope information. For example, the target gear is the first gear. In this case, the control module may shift the gear in the operation instruction to the first gear, to obtain an adjusted operation instruction, and send the operation instruction to the gear execution module, without a need to reduce the moving speed of the vehicle. The gear execution module may shift the gear of the vehicle down to the first gear. In this way, the vehicle passes through the uphill in a low gear at a high moving speed. Therefore, the traction for enabling the vehicle to pass through the uphill can be increased, and the vehicle can pass through the uphill more quickly.

For another example, it is assumed that a current moving speed of the vehicle is 10 km/h. If the control module determines, according to sensor data, that the vehicle is currently at a turning point of a road, the sensor data may be obtained. The sensor data includes driving environment information. For example, the driving environment information includes turning information of the turning point. The turning information may be obtained by a video sensor or obtained by an IMU. The turning information includes a turning angle, length, and the like of the turning point. Further, the control module may determine a target gear of the vehicle according to the current moving speed of the vehicle and the turning information. For example, the target gear is the third gear. In this case, the control module may shift the gear in the operation instruction to the third gear, to obtain an adjusted operation instruction, sends the operation instruction to the gear execution module, without a need to increase the moving speed of the vehicle. The gear execution module may shift the gear of the vehicle up to the third gear. In this way, the vehicle passes through the turning point in a high gear at a low moving speed. Therefore, the fuel consumption of the vehicle can be reduced, and energy efficiency is higher.

In an embodiment, to support execution of the system 10 for controlling a vehicle, the first execution unit 13 includes a gearbox. FIG. 5 is a schematic structural diagram of a gearbox according to an embodiment of the present application. The gearbox is implemented by a planetary gear. A central axis of the planetary gear is a sun gear, surrounded by planetary gears. To hold the planetary gears that rotate around the sun gear, one side of a planet carrier functions as a support to carry the planetary gears, and the other side of the planet carrier performs coaxial power transmission. The outermost ring of the planetary gear is a ring gear. To improve power transmission capability, some planetary gear sets are transformed into two sets of pinions to transmit power to each other. One set is in contact with the sun gear, and the other set is in contact with the ring gear. This is referred to as a double-pinion planetary gear set.

Further, FIG. 6 is a schematic structural diagram of a connection between an oil pump and a hydraulic coupler in a first execution unit 13 according to an embodiment of the present application. Components are shown from left to right in FIG. 6 as follows. On the far left is the hydraulic coupler connected to an engine. Right next to the hydraulic coupler is the oil pump, and then power is transmitted to a first planetary gear set (that is, the gearbox). As previously mentioned, the gearbox includes a sun gear S1, a planetary gear P1, a planet carrier PT1, and a ring gear H1. On the right side of the gearbox is a compound planetary gear set. The two planetary gear sets share a ring gear H2, but respectively have two planetary gears P2/P3, a planet carriers PT2, and a sun gear S2/S3. Brake B1/B2 composed of a plurality of different clutches and clutch K1/K2/K3 are combined to obtain six forward gears/one reverse gear.

It may be understood that, the foregoing disclosure is merely preferred embodiments of the present application, and should definitely not be used to limit the scope of rights of the present application. A person of ordinary skill in the art may understand that all or some procedures for implementing the foregoing embodiments, and equivalent changes made according to the claims of the present application shall still fall within the protection scope of the present invention.

**Claims**

1.  A system for controlling a vehicle, **characterized in that**, comprising:

    a control module, electrically connected to a vehicle control bus and configured to receive a bus signal from the vehicle control bus, wherein the control module includes one or more processors configured to:

       query a type of a control signal according to the bus signal; and
       convert-to-analog a control output signal of a vehicle according to a result of the query to control a driving state of the vehicle.

2.  The system according to claim 1, **characterized in that**, the controlling of the driving state of the vehicle includes:

    generating an analog signal according to the result of the query, wherein the analog signal is used for controlling driving of the vehicle, and outputting the signal generated through the converting-to-analog to a corresponding execution unit.

3.  The system according to claim 2, **characterized in that**, the converting-to-analog of the signal of the type corresponding to the result of the query includes:
    the signal converted-to-analog according to the result of the query has a same waveform, voltage amplitude, and frequency as the control signal obtained through the query.

4.  The system according to claim 3, **characterized in that**, the control signal includes a transmitted vehicle sensor signal and/or a vehicle status signal.

5.  The system according to any one of claims 1 to 4, **characterized in that**,

   the bus signal is used for representing whether the vehicle is in a manually operated driving mode by a driver or in an automatically operated driving mode for autonomous driving, and
   the bus for transmitting the control signal includes a status signal bus electrically connected to a vehicle alert module and/or a sensor bus electrically connected to a sensor unit.

6.  The vehicle control signal according to claim 5, **characterized in that**, the control module prestores a plurality of control signals for representing that the vehicle is in different driving states.

7.  The system according to claim 6, **characterized in that**,

   the sensor unit includes a first sensor, wherein the first sensor is configured to sense one of driving states of the vehicle and output a first sensing signal,
   the control module further includes an analog control processor, wherein the analog control processor outputs a first analog signal according to the first sensing signal in the control signal obtained through the query, and the first analog signal has a same changing curve as the sensing signal; and
   the execution unit includes a first execution unit, and the control module selectively transmits the first sensing signal or the first analog signal to the first execution unit, to control the first execution unit to perform a first driving operation of the vehicle.

8.  The system according to claim 7, **characterized in that**,

   when the vehicle is in the manually operated driving mode, the analog control processor controls the first sensor to be electrically connected to the execution control unit, and controls the execution unit according to the first sensing signal, to control the vehicle to be in the manually operated driving mode, and
   when the vehicle is in the automatically operated driving mode, the analog control processor controls the first analog signal to be transmitted to the execution control unit, to control the execution unit according to the first analog signal, so as to control the vehicle to be in the automatically operated driving mode.

9.  The system according to claim 7, **characterized in that**,

the first sensor signal and the first analog signal are two differential signals,

the first sensor signal includes a first sensing differential signal and a second sensing differential signal, and a second voltage range of the second sensing differential signal is greater than a first voltage range of the first sensing differential signal, and

the first analog signal includes a first analog differential signal and a second analog differential signal, the first analog differential signal has a same changing curve as the first sensing differential signal, and the second analog differential signal has a same changing curve as the second sensing differential signal.

10. The system according to claim 9, **characterized in that**, further comprising an analog unit,

the analog control processor further includes a storage unit, a processing unit, and a signal generation unit, the signal generation unit is electrically connected to the storage unit and the signal generation unit, and the signal generation unit is electrically connected to the analog unit,

the storage unit is configured to prestore a plurality of first sensor signals,

the processing unit obtains one first sensor signal through the query from the storage unit according to the bus signal, and the signal generation unit outputs a reference signal according to the first sensor signal obtained through the query, and

the analog unit generates the first analog signal according to the reference signal.

11. The system according to claim 10, **characterized in that**, the signal generation unit is a pulse width modulation circuit, and the reference signal is a pulse width modulation signal output by the pulse width modulation circuit.

12. The system according to claim 11, **characterized in that**, the analog unit includes an operational amplifier and an addition operator, the operational amplifier is electrically connected to the signal generation unit, and the addition operator is electrically connected to the operational amplifier,

the operational amplifier receives the pulse width modulation signal, performs operational amplification processing on the pulse width modulation signal to converts the pulse width modulation signal into an analog voltage signal, the analog voltage signal has a first voltage range, and the analog voltage signal is transmitted to the relay as the first analog differential signal, and

the addition operator performs an addition operation on the first analog differential signal to obtain a second voltage range as the second analog differential signal.

13. The system according to claim 12, **characterized in that**, the analog unit further includes a voltage follower, the voltage follower is electrically connected to the signal generation unit and the operational amplifier, to further perform a process of voltage following on the pulse width modulation signal before the operational amplification processing is performed on the pulse width modulation signal, so as to isolate the operational amplifier to prevent interference.

14. The system according to claim 10, **characterized in that**, further comprising a first switch unit, the first switch unit is electrically connected to the analog unit, the sensor unit, the first execution unit, and the processing unit, the processing unit outputs a selection signal to the switch unit according to the bus signal, to control the first switch unit to electrically connect the sensor unit to the first execution unit or to electrically connect the analog unit to the processing unit according to a mode of the vehicle corresponding to the selection signal.

15. The system according to claim 14, **characterized in that**, the first switch unit is a double-pole double-throw relay, and the relay includes two normally closed input contacts, two normally open input contacts, and two output terminals,

the two normally closed input contacts of the relay are electrically connected to the first sensor, to receive the first sensing differential signal and the second sensing differential signal in the first sensing signal,

the two normally open input contacts of the relay are electrically connected to the analog control unit, to receive the first analog differential signal and the second analog differential signal in the first analog signal, and

the selection signal controls the two output terminals of the relay to be electrically connected to the execution control unit, to selectively provide the first sensing signal or the first analog signal to the first execution unit.

16. The system according to claim 15, **characterized in that**,

when the selection signal represents that the vehicle is in the manually operated driving mode, the analog control processor controls the two normally closed input contacts to be electrically connected to the two output terminals, to provide the first sensing signal to the first control module, and

when the selection signal represents that the vehicle is in the automatically operated driving mode, the analog control processor controls the two normally open input contacts to be electrically connected to the two output terminals, to provide the first analog signal to the first control module.

17. The system according to claim 14, **characterized in that**, the first switch unit is a multiway digital switch, the multiway digital switch includes at least two groups of input ports and at least one group of output ports, the two groups of input port are not simultaneously electrically connected to the group of output ports, each group of input ports includes two input ports, and each group of output ports includes two output ports,

two input ports in one group of input ports are electrically connected to the first sensor, to receive the first sensing differential signal and the second sensing differential signal in the first sensing signal,

two input ports in another group of input ports are electrically connected to the analog control unit, to receive the first analog differential signal and the second analog differential signal in the first analog signal, and

the analog control processor is further configured to control the two input ports to be connected to the execution control unit, to selectively provide the first sensing signal or the first analog signal.

18. The system according to claim 17, **characterized in that**,

when the selection signal represents that the vehicle is in the manually operated driving mode, the analog control processor controls the one group of input ports to be electrically connected to the group of output ports, to provide the first sensing signal to the execution control unit, and

when the selection signal represents that the vehicle is in the automatically operated driving mode, the analog control processor controls the another group of input ports to be electrically connected to the group of output ports, to provide the first analog signal to the execution control unit.

19. The system according to claim 18, **characterized in that**, the first voltage range is 0.4 V to 1.8 V, and the second voltage range is 0.8 V to 3.6 V.

20. The system according to claim 10, **characterized in that**, the analog control processor includes a first mode conversion unit, the first mode conversion unit is electrically connected to the two normally open input contacts of the relay and the processing unit, and the first mode conversion unit receives the first analog differential signal and the second analog differential signal that are fed back and performs analog-to-digital conversion to convert the first analog differential signal and the second analog differential signal into digital signals, and

the processing unit adjusts the pulse width modulation signal according to the first analog differential signal and the second analog differential signal that are fed back as digital signals, so that the first analog differential signal and the second analog differential signal are within a preset range.

21. The system according to claim 20, **characterized in that**, the first analog-to-digital conversion unit is further electrically connected to the first sensor, to receive the first sensing differential signal and the second sensing differential signal that are fed back and perform analog-to-digital conversion processing on the first sensing differential signal and the second sensing differential signal, and

the processing unit determines a state of a first driving module according to the first sensing differential signal and the second sensing differential signal on which the analog-to-digital conversion processing has been performed, and the analog control processor performs an operation of driving in the automatically operated driving mode or exits the automatically operated driving mode according to the state of the first driving module.

22. The system according to any one of claims 7 to 21, **characterized in that**,

the first sensor is a throttle position sensor, the driving module is a throttle pedal, and the first sensor is configured to sense a stroke position of the throttle pedal, to correspondingly output the first sensing signal, or

the first sensor is a steering wheel sensor configured to sense the position of a steering wheel when it turns, a brake sensor configured to sense a brake stroke position, a door lock sensor configured to sense a door lock position, or a gear sensor configured to sense a gear position, to correspondingly output the first sensing signal.

23. The system according to claim 6, **characterized in that**:

a status signal line in the bus for transmitting the control signal is configured to transmit a status signal, and the status signal is to control the vehicle to perform an alert operation, and

the analog control processor controls, according to the status signal, a second execution unit to perform a first alert operation, so that the vehicle is in a first alert state.

24. The system according to claim 23, **characterized in that**, further comprising a voltage dividing circuit, a voltage control circuit, a second switch unit, the second execution unit, and a power supply unit,

 the analog control processor further includes a second analog-to-digital conversion unit and a first output unit,
 the voltage dividing circuit is electrically connected to the status signal line and the second analog-to-digital conversion unit and is configured to output an identification voltage signal to the second analog-to-digital conversion unit according to a voltage state of the status signal, and the analog-to-digital conversion unit converts the identification voltage signal into a digital signal and outputs the digital signal from the first output unit,
 the voltage control circuit is electrically connected between the first output unit and the second switch unit, and outputs a second control signal to the second switch unit according to the identification voltage signal, and
 the power supply unit is electrically connected to the switch module and the second execution unit, and the second switch unit selectively transmits a first driving voltage provided by the power supply unit to the second execution unit under the control of the second control signal.

25. The system according to claim 24, **characterized in that**, the second switch unit includes a first connection terminal, a second connection terminal, and a control terminal, the first connection terminal and the second connection terminal are selectively electrically connected or electrically disconnected according to a voltage of the control terminal, the first connection terminal is electrically connected to the power supply unit to receive the first driving voltage, the second connection terminal is electrically connected to the second execution unit, and the control terminal is electrically connected to the voltage control circuit, and
 when the second control signal is in a first voltage state, the first connection terminal and the second connection terminal are electrically connected, and the first driving voltage is transmitted to the second execution unit; and when the second control signal is in a second voltage state, the first connection terminal and the second connection terminal are electrically disconnected, and transmission of the first driving voltage to the second execution unit is stopped.

26. The system according to claim 25, **characterized in that**,
when the status signal is at the first voltage, the second control signal is controlled to be in the first voltage state, and when the status signal is at the second voltage, the second control signal is controlled to be in the second voltage state.

27. The system according to claim 26, **characterized in that**,

 the first alert operation is a left turn alert or a right turn alert of the vehicle, the first alert state is that a left turn signal is turned on or a right turn signal is turned on, and the second execution module is the left turn signal or the right turn signal, and
 the second output signal is an electrical signal transmitted by a left turn signal harness or a right turn signal harness in the vehicle control bus that is electrically connected to the left turn signal or the right turn signal and that transmits the first driving voltage.

28. The system according to claim 27, **characterized in that**,

 the first alert operation is a door lock control alert, an ignition switch control alert, an emergency flasher control alert, a low beam headlamp alert, a width lamp alert, a front fog lamp alert, a rear fog lamp alert, or a high beam headlamp alert, the first alert state is that lock control, ignition switch control, emergency flasher control, a low beam headlamp, a width lamp, a front fog lamp, a rear fog lamp, or a high beam headlamp is activated, and
 the second execution module is a door lock, an ignition switch, an emergency flasher, the low beam headlamp, the width lamp, the front fog lamp, the rear fog lamp, or the high beam headlamp.

29. A vehicle, **characterized in that**, comprising the system according to any one of claims 1 to 28.

FIG. 1

First sensing differential voltage signal

0.8 V to 3.6 V

Second sensing differential voltage signal

0.4 V to 1.8 V

FIG. 2

183

VDD    181        182        19

FIG. 3

| Measurement Parameter ⇨ | Throttle | Engine Speed | Moving Speed | Lateral Acceleration | Longitudinal Acceleration |

Level ⇩

Match Gear Shift Characteristic Curve

First Level

Sum of measured values
Filter
Average
Weight
⇒ Modulation Coefficient ⇒ Gear shift Characteristic Curve

Short-time response                    Special Function

Second Level

Avoid Inertial Driving before Turning- Shift to High Gear ⇒ Turn and Hold the Gear ⇒ Activate Skip Gear ⇒ Control Sliding with Low Friction Coefficient Shift to High Gear

Third Level

Manually Shift Gear Slightly        Shift to High Gear Shift to Low Gear

FIG. 4

1

Instruction
Generation
Module

Control
Module

Execution
Unit

Gear Control
Module

Gear
Execution
Module

FIG. 5

Ring

Planet Carrier

Sun Gear

Planetary Gear

FIG. 6

FIG. 7

## INTERNATIONAL SEARCH REPORT

| | International application No. |
|---|---|
| | **PCT/CN2019/080144** |

| A. | CLASSIFICATION OF SUBJECT MATTER |
|---|---|

B60W 30/00(2006.01)i;  B60W 40/00(2006.01)i

According to International Patent Classification (IPC) or to both national classification and IPC

| B. | FIELDS SEARCHED |
|---|---|

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNABS; CNKI; CNTXT; DWPI; SIPOABS; WOTXT; EPTXT; USTXT: 自动驾驶, 人工驾驶, 人为驾驶, 手动驾驶, 控制, 总线, 信号, 类型, 模拟, autopilot, autonomous, manual, control, bus?, signal, mode, analog

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 106080606 A (BAIDU ONLINE NETWORK TECHNOLOGY (BEIJING) CO., LTD.) 09 November 2016 (2016-11-09) description, paragraphs [0016]-[0022], and figures 1-5 | 1-29 |
| A | CN 107792075 A (TOYOTA JIDOSHA KABUSHIKI KAISHA) 13 March 2018 (2018-03-13) entire document | 1-29 |
| A | CN 108313060 A (TONGJI UNIVERSITY) 24 July 2018 (2018-07-24) entire document | 1-29 |
| A | CN 107656519 A (BAIC BJEV CO., LTD.) 02 February 2018 (2018-02-02) entire document | 1-29 |
| A | WO 2015049253 A1 (VOLKSWAGEN AG) 09 April 2015 (2015-04-09) entire document | 1-29 |

☐ Further documents are listed in the continuation of Box C.   ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 July 2019** | **24 July 2019** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

EP 3 885 213 A1

## INTERNATIONAL SEARCH REPORT
**Information on patent family members**

International application No.

**PCT/CN2019/080144**

| Patent document cited in search report | | | Publication date (day/month/year) | Patent family member(s) | | | Publication date (day/month/year) |
|---|---|---|---|---|---|---|---|
| CN | 106080606 | A | 09 November 2016 | CN | 106080606 | B | 01 January 2019 |
| CN | 107792075 | A | 13 March 2018 | US | 10173694 | B2 | 08 January 2019 |
| | | | | JP | 6443694 | B2 | 26 December 2018 |
| | | | | US | 2018065643 | A1 | 08 March 2018 |
| | | | | JP | 2018039388 | A | 15 March 2018 |
| CN | 108313060 | A | 24 July 2018 | None | | | |
| CN | 107656519 | A | 02 February 2018 | None | | | |
| WO | 2015049253 | A1 | 09 April 2015 | US | 10146357 | B2 | 04 December 2018 |
| | | | | DE | 102013110864 | A1 | 02 April 2015 |
| | | | | EP | 3052354 | A1 | 10 August 2016 |
| | | | | US | 2016231855 | A1 | 11 August 2016 |

Form PCT/ISA/210 (patent family annex) (January 2015)

19